# FASCICULE DE BREVET EUROPEEN

(11) **EP 2 697 493 B1**
(45) Date de publication et mention de la délivrance du brevet: **03.01.2018**
(21) Numéro de dépôt: 12722413.7
(22) Date de dépôt: 12.04.2012
(51) Int. Cl.: F02C 7/236, F02C 7/232, F02C 9/46

(54) **CIRCUIT DE CARBURANT COMPORTANT DES MOYENS DE CONTROLE D'UNE POMPE**
BRENNSTOFFLEITUNGEN MIT VORRICHTUNGEN ZUR PRÜFUNG EINER PUMPE
FUEL PIPES WITH MEANS FOR CONTROLLING A PUMP

(30) Priorité: 14.04.2011 FR 1153233
(43) Date de publication de la demande: 19.02.2014
(73) Titulaire: SNECMA, 75015 Paris (FR)
(72) Inventeur: POTEL, Nicolas, F-77550 Moissy-Cramayel Cedex (FR); BADER, Nicolas, Alain, F-77550 Moissy-Cramayel Cedex (FR)
(74) Mandataire: Ahner, Philippe
(86) Numéro de dépôt international: PCT/FR2012/050805
(87) Numéro de publication internationale: WO 2012/140373

(56) Documents cités:
- EP-A2- 1 849 975
- EP-A2- 2 088 302
- FR-A1- 2 931 885
- GB-A- 758 679
- GB-A- 2 180 005
- US-A- 4 375 745
- US-A1- 2004 117 102
- US-A1- 2008 296 403
- US-A1- 2010 115 959

## Description

### DOMAINE TECHNIQUE

L'invention propose un circuit de carburant de turbomachine comportant des moyens permettant de détecter une panne d'une pompe d'alimentation en carburant.

L'invention propose plus particulièrement un circuit de carburant limitant le nombre de capteurs de panne des composants du circuit.

### ÉTAT DE LA TECHNIQUE ANTÉRIEURE

Le circuit de carburant d'une turbomachine d'aéronef comporte principalement une pompe basse pression alimentant une pompe haute pression, la pompe haute pression alimentant les divers composants de la turbomachine. Le débit et la pression de carburant en sortie de la pompe basse pression permettent de "gaver" la pompe haute pression.

La pompe basse pression est elle même alimentée en carburant par une pompe d'alimentation de l'aéronef.

En cas de panne de la pompe basse pression, la pression de carburant alimentant la pompe haute pression est relativement faible. Il s'en suit que la pompe haute pression subit des contraintes importantes pour être capable de fournir une pression de carburant suffisante.

Ces contraintes plus importantes provoquent une usure prématurée de la pompe haute pression, et un risque de panne de celle-ci lorsque l'aéronef est en vol.

Pour réduire le risque de panne en vol de la pompe haute pression provoqué par la pompe basse pression, il a été proposé des contrôles périodiques de la pompe basse pression, des vérifications visuelles, ou bien d'associer à la pompe basse pression un capteur permettant de détecter la panne de la pompe.

L'utilisation d'un capteur permet de détecter automatiquement la panne de la pompe basse pression, et ainsi d'effectuer une opération de maintenance adaptée.

Une telle méthode de contrôle avec un capteur associé à la pompe basse pression augmente la complexité du système électronique de la turbomachine, qui doit comporter une voie de communication associée à chaque capteur.

Cela augmente aussi les coûts et la masse de la turbomachine, notamment du fait de la présence de câbles électriques de grande longueur.

L'invention a pour but de proposer des moyens pour détecter automatiquement une panne ou une dégradation de la pompe basse pression permettant de limiter le nombre de capteurs utilisés dans le circuit de carburant. FR2931885 montre les caractéristiques techniques du préambule de la revendication indépendante 1.

### EXPOSÉ DE L'INVENTION

L'invention propose un circuit de carburant d'une turbomachine qui comporte :
- une pompe basse pression alimentant le circuit de carburant en carburant sous pression,
- une pompe haute pression alimentée en carburant par la pompe basse pression,
- un conduit basse pression reliant la pompe basse pression à la pompe haute pression,
- au moins un conduit haute pression alimenté en carburant par ladite pompe haute pression, dans lequel au moins un composant de la turbomachine est agencé, ledit conduit haute pression comportant un tronçon alimentant ledit composant de la turbomachine,
- des moyens de contrôle du fonctionnement dudit au moins un composant de la turbomachine,
caractérisé en ce qu'il comporte un clapet apte à obturer au moins en partie un tronçon dudit au moins un conduit qui est associé au composant, lorsque la pression de carburant dans le conduit basse pression est inférieure à une valeur de seuil prédéterminée, et en ce que les dits moyens de contrôle sont aptes à détecter que le clapet obture au moins en partie ledit tronçon.

La détection d'une panne de la pompe basse pression par les moyens de contrôle du composant de la turbomachine permet de ne pas utiliser de capteur associé à la pompe basse pression, tout en conservant la fonction de détection de panne de la pompe basse pression.

De préférence, le clapet est actionné directement par le carburant dans le conduit basse pression.

De préférence, le circuit de carburant comporte un conduit reliant directement le clapet au conduit alimenté par la pompe.

De préférence, le clapet est agencé dans un tronçon du conduit situé en amont dudit composant.

De préférence, le clapet est agencé dans un tronçon du conduit situé en aval dudit composant.

De préférence, la pression dans le conduit basse pression est variable en fonction du régime de la turbomachine, et la dite valeur de seuil est sensiblement égale à la valeur minimale de la pression que la pompe basse pression est apte à fournir quelles que soient les conditions de fonctionnement de la turbomachine.

De préférence, le clapet est apte à obturer complètement le tronçon lorsque la valeur de la pression dans le conduit basse pression est inférieure à la dite valeur de seuil.

De préférence, le clapet est apte à obturer en partie le tronçon lorsque la valeur de la pression dans le conduit basse pression est inférieure à la dite valeur de seuil.

L'invention propose aussi une turbine d'aéronef comportant une pompe basse pression alimentant en carburant une pompe haute pression, caractérisée en ce qu'elle comporte un circuit de carburant comportant un clapet selon l'une quelconque des revendications précédentes.

### BRÈVE DESCRIPTION DES DESSINS

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique d'un circuit de carburant selon l'invention, dans lequel la pompe basse pression est en état de fonctionnement ;
- la figure 2 est une représentation similaire à celle de la figure 1, dans laquelle la pompe basse pression est hors service.

### EXPOSÉ DÉTAILLÉ DE MODES DE RÉALISATION PARTICULIERS

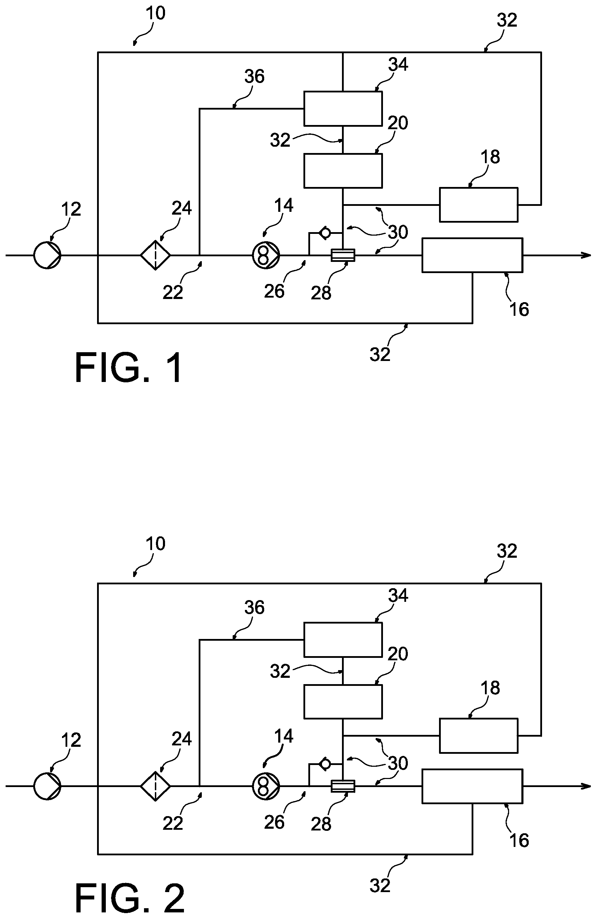

On a représenté à la figure 1 un circuit de carburant 10 d'une turbomachine telle qu'un turboréacteur d'avion.

Le circuit de carburant 10 comporte une pompe basse pression 12 alimente le circuit de carburant 10. La pression de carburant en sortie de la pompe basse pression peut atteindre 12 bars.

Le circuit de carburant 10 comporte aussi une pompe haute pression 14 alimentée en carburant par la pompe basse pression 12 et qui fournit du carburant à une pression élevée.

Ce carburant à pression élevée est destiné à alimenter les composants de la turbomachine parmi lesquels une unité 16 de dosage du carburant délivrant le carburant à la chambre de combustion, des actionneurs 18 d'aubes à géométrie variable de la turbomachine ou des vannes 20 permettant de piloter un jeu radial entre des aubes mobiles et un carter fixe.

Le circuit de carburant 10 comporte un conduit basse pression 22 reliant la pompe basse pression 12 à la pompe haute pression 14, dans lequel un filtre 24 est disposé.

Le circuit de carburant 10 comporte aussi un conduit haute pression 26 reliant la pompe haute pression 14 aux composants 16, 18, 20 de la turbomachine.

Le conduit haute pression 26 comporte notamment un distributeur 28 et des tronçons haute pression 30 répartissant le carburant vers les composants 16, 18, 20.

Chacun de ces composants 16, 18, 20 est raccordé au conduit basse pression par des tronçons de retour 32 associés qui débouchent ici en amont du filtre 24.

Chacun des composants 16, 18, 20 comporte en outre des moyens associés pour le contrôle de son fonctionnement qui sont raccordés à un dispositif électronique de commande. Ces moyens de contrôle et le dispositif électronique de commande permettent d'émettre une alerte spécifique lorsqu'une panne de l'un des composant 16, 18, 20 est détectée.

Le circuit de carburant 10 comporte aussi un clapet 34 qui est associé à un composant 20 du circuit de carburant 10.

Le clapet 34 est agencé de manière à obturer au moins en partie le tronçon haute pression 30 ou le tronçon de retour 32 associé audit composant 20 lorsque la pression du carburant provenant de la pompe basse pression 12 est inférieure à une valeur de seuil prédéfinie.

L'actionnement du clapet 34 est ici réalisé par le carburant dans le conduit basse pression 22.

En effet, la pression de carburant en sortie de la pompe basse pression 12 est sensiblement la pression de carburant dans le conduit basse pression 12.

A cet effet, un piquage 36 relie le conduit basse pression 22 au clapet 34.

Le clapet 34 est réalisé de manière qu'il obture le tronçon 30, 32 associé audit composant 20 lorsque la pression dans le conduit basse pression 22 est inférieure à ladite valeur de seuil prédéterminée.

Lorsque la pression de carburant dans le conduit basse pression 22 est supérieure à la valeur de seuil, le clapet est maintenu dans une position dans laquelle il n'obture pas le tronçon 30, 32 associé au composant 20, pour ne pas empêcher son fonctionnement.

Par exemple, le clapet 34 comporte un ressort de rappel vers la position d'obturation, qui est comprimé sous l'action de la pression de carburant, et qui est taré en fonction de la valeur de seuil.

La pression de carburant en sortie de la pompe basse pression 12 est variable avec le régime de la turbomachine. A cet effet, et à titre d'exemple non limitatif, la valeur de seuil de la pression pour laquelle le clapet 34 obture le tronçon 30, 32 est définie comme étant la valeur minimale de la pression de carburant en sortie de la pompe basse pression 12 correspondant au régime minimum de la turbomachine, par exemple le régime ralenti de la turbomachine.

Lorsque la pression de carburant dans le conduit basse pression 22 est inférieure à la valeur de seuil, le clapet obture au moins en partie le tronçon 30, 32 associé au composant 20.

Cette obturation du tronçon 30, 32 provoque un défaut de fonctionnement, tel qu'un ralentissement, ou l'arrêt complet du composant 20.

Les moyens de contrôle associés au composant 20 sont aptes à détecter ce défaut de fonctionnement provoqué par l'obturation provoquée par le clapet 34, et une alerte est émise par le dispositif électronique de commande.

Cette alerte peut être analysée comme étant une panne du composant 20 ou de la pompe basse pression 12.

Ainsi, suite à cette alerte le composant 20 et la pompe basse pression 12 sont inspectés pour vérifier lequel du composant 20 et/ou de la pompe basse pression 12 est hors service.

Comme on peut le voir à la figure 1, lorsque la pompe basse pression 12 est en état de fonctionnement, la valeur de la pression dans le conduit basse pression 22 est supérieure à la valeur de seuil.

La pression de carburant permet alors de maintenir le clapet 34 dans sa position d'ouverture du tronçon 32 dans lequel il est agencé.

Le clapet 34 n'empêche donc pas le fonctionnement du composant 20 associé.

Par contre, comme on peut le voir à la figure 2, lorsque la pompe basse pression 12 est hors service, la pression de carburant dans le conduit basse pression 22 est inférieure à la valeur de seuil.

Le clapet 34 est alors dans sa position de fermeture au moins partielle du tronçon 32. Ici, le clapet 34 obture complètement le tronçon 32, c'est pourquoi la partie du tronçon 32 en aval du clapet 34 n'est pas représentée.

Le composant 20 ne peut alors plus fonctionner correctement. Les moyens de contrôle du composant détectent alors cette panne du composant et une alerte est émise par le dispositif électronique de commande.

Ici, comme on peut le voir sur figures 1 et 2, le clapet 34 est agencé dans le tronçon retour 32 associé au composant 20, c'est-à-dire en aval du composant 20, de sorte que lorsque le clapet 34 est fermé, le carburant ne peut plus sortir du composant 20.

Selon une variante de réalisation non représentée, le clapet 34 est agencé dans le tronçon haute pression 30 alimentant le composant 20, c'est-à-dire en amont du composant 20. Ainsi, lorsque le clapet 34 est fermé, le composant 20 n'est pas alimenté en carburant.

Aussi, selon un premier mode de réalisation du clapet 34, celui-ci est réalisé de manière à obturer en totalité le tronçon 30, 32 dans lequel il est agencé, de manière à empêcher totalement le fonctionnement du composant 20.

Selon un autre mode de réalisation du clapet 34, celui-ci est réalisé de manière à obturer en partie seulement le tronçon 30, 32 dans lequel il est agencé, de manière à limiter le fonctionnement du composant 20, par exemple pour ralentir le fonctionnement du composant 20.

Les moyens de contrôle du composant 20 sont alors réalisés de manière à être aptes à détecter ce fonctionnement limité et/ou ralenti du composant 20.

Selon un autre aspect du clapet 34, le composant 20 associé au clapet 34, c'est-à-dire dans le tronçon 30, 32 duquel le clapet 34 est agencé, est un composant 20 pour lequel l'interruption ou la limitation du fonctionnement produite par la fermeture complète ou partielle du clapet 34 ne risque pas d'interrompre le fonctionnement de la turbomachine.

A titre d'exemple non limitatif, le composant 20 est une vanne régulant un débit d'air permettant de contrôler un jeu radial entre le sommet des aubes de la turbine basse pression, et le carter de la turbine basse pression.

## Revendications

1. Circuit de carburant (10) d'une turbomachine qui comporte :
- une pompe basse pression (12) alimentant le circuit de carburant (10) en carburant sous pression,
- une pompe haute pression (14) alimentée en carburant par la pompe basse pression (12),
- un conduit basse pression (22) reliant la pompe basse pression (12) à la pompe haute pression (14),
- au moins un conduit haute pression (26) alimenté en carburant par ladite pompe haute pression (14), dans lequel au moins un composant (20) de la turbomachine est agencé, ledit conduit haute pression (26) comportant un tronçon (30) alimentant ledit composant (20) de la turbomachine,
- des moyens de contrôle du fonctionnement dudit au moins un composant (20) de la turbomachine,
**caractérisé en ce qu'**il comporte un clapet (34) apte à obturer au moins en partie un tronçon (30, 32) dudit au moins un conduit (26) qui est associé au composant (20), lorsque la pression de carburant dans le conduit basse pression (22) est inférieure à une valeur de seuil prédéterminée, et **en ce que** les dits moyens de contrôle sont aptes à détecter que le clapet (34) obture au moins en partie ledit tronçon (30, 32).

2. Circuit de carburant (10) selon la revendication précédente, **caractérisé en ce que** le clapet (34) est actionné directement par le carburant dans le conduit basse pression (22).

3. Circuit de carburant (10) selon la revendication précédente, **caractérisé en ce qu'**il comporte un conduit (36) reliant directement le clapet (34) au conduit (22) alimenté par la pompe (12).

4. Circuit de carburant (10) selon l'une quelconque des revendications précédentes, **caractérisé en ce que** le clapet (34) est agencé dans un tronçon (30) du conduit (26) situé en amont dudit composant (20) .

5. Circuit de carburant (10) selon l'une quelconque des revendications 1 à 3, **caractérisé en ce que** le clapet (34) est agencé dans un tronçon (30) du conduit (26) situé en aval dudit composant (20).

6. Circuit de carburant (10) selon l'une quelconque des revendications précédentes, dans lequel la pression dans le conduit basse pression (22) est variable en fonction du régime de la turbomachine,
**caractérisé en ce que** la dite valeur de seuil est sensiblement égale à la valeur minimale de la pression que la pompe (12) est apte à fournir quelles que soient les conditions de fonctionnement de la turbomachine.

7. Circuit de carburant (10) selon l'une quelconque des revendications précédentes, **caractérisé en ce que** le clapet (34) est apte à obturer complètement le tronçon (30, 32) lorsque la valeur de la pression dans le conduit basse pression (22) est inférieure à la dite valeur de seuil.

8. Circuit de carburant (10) selon l'une quelconque des revendications précédentes, **caractérisé en ce que** le clapet (34) est apte à obturer en partie le tronçon (30, 32) lorsque la valeur de la pression dans le conduit basse pression (22) est inférieure à la dite valeur de seuil.

9. Turbine d'aéronef comportant une pompe (12) basse pression alimentant en carburant une pompe haute pression (14),
**caractérisée en ce qu'**elle comporte un circuit de carburant (10) comportant un clapet (34) selon l'une quelconque des revendications précédentes.

## Patentansprüche

1. Brennstoffleitungssystem (10) in einem Turbotriebwerk mit:
- einer Niederdruckpumpe (12), die die Brennstoffleitung (10) mit unter Druck stehendem Brennstoff speist,
- einer Hochdruckpumpe (14), die von der Niederdruckpumpe (12) mit Brennstoff gespeist wird,
- einer Niederdruckleitung (22), die die Niederdruckpumpe (12) mit der Hochdruckpumpe (14) verbindet,
- mindestens einer Hochdruckleitung (26), die durch die genannte Hochdruckpumpe (14) mit Brennstoff gespeist wird, und in der mindestens ein Bauteil (20) des Turbotriebwerks angeordnet ist, wobei diese Hochdruckleitung (26) einen Abschnitt (30) enthält, der dieses Bauteil (20) des Turbotriebwerks speist,
- Mitteln zur Funktionskontrolle dieses mindestens einen Bauteils (20) des Turbotriebwerks,
**dadurch gekennzeichnet,**
**dass** es eine Drosselklappe (34) aufweist, die geeignet ist, einen Abschnitt (30, 32) dieser mindestens einen Leitung (26), der mit dem Bauteil (20) verbunden ist, zumindest teilweise zu verschließen, wenn der Brennstoffdruck in der Niederdruckleitung (22) geringer ist als ein vorbestimmter Schwellenwert, und dass die genannten Funktionskontrollmittel geeignet sind, zu erkennen, dass die Drosselklappe (34) den genannten Abschnitt (30, 32) zumindest teilweise verschließt.

2. Brennstoffleitungssystem (10) nach dem vorherigen Anspruch,
**dadurch gekennzeichnet,**
**dass** die Drosselklappe (34) unmittelbar durch den Brennstoff in der Niederdruckleitung (22) betätigt wird.

3. Brennstoffleitungssystem (10) nach dem vorherigen Anspruch,
**dadurch gekennzeichnet,**
**dass** es eine Leitung (36) umfasst, die die Drosselklappe (34) direkt mit der Leitung (22) verbindet, die durch die Pumpe (12) gespeist wird.

4. Brennstoffleitungssystem (10) nach einem der vorherigen Ansprüche,
**dadurch gekennzeichnet,**
**dass** die Drosselklappe (34) in einem Abschnitt (30) der Leitung (26) angeordnet ist, welcher sich in Strömungsrichtung vor dem genannten Bauteil (20) befindet.

5. Brennstoffleitungssystem (10) nach einem der Ansprüche 1 bis 3,
**dadurch gekennzeichnet,**
**dass** die Drosselklappe (34) in einem Abschnitt (30) der Leitung (26) angeordnet ist, welcher sich in Strömungsrichtung hinter dem genannten Bauteil (20) befindet.

6. Brennstoffleitungssystem (10) nach einem der vorherigen Ansprüche, bei dem der Druck in der Niederdruckleitung (22) in Abhängigkeit von der Drehzahl des Turbotriebwerks variabel ist,
**dadurch gekennzeichnet,**
**dass** der genannte Schwellenwert im Wesentlichen gleich dem Minimalwert des Drucks ist, den die Pumpe (12) bei jeglichen Betriebsbedingungen des Turbotriebwerks liefern kann.

7. Brennstoffleitungssystem (10) nach einem der vorherigen Ansprüche,
**dadurch gekennzeichnet,**
**dass** die Drosselklappe (34) geeignet ist, den Abschnitt (30, 32) komplett zu verschließen, wenn der Wert des Drucks in der Niederdruckleitung (22) geringer ist als der genannte Schwellenwert.

8. Brennstoffleitungssystem (10) nach einem der vorherigen Ansprüche,
**dadurch gekennzeichnet,**
**dass** die Drosselklappe (34) geeignet ist, den Abschnitt (30, 32) teilweise zu verschließen, wenn der Wert des Drucks in der Niederdruckleitung (22) geringer ist als der genannte Schwellenwert.

9. Turbine eines Luftfahrzeugs mit einer Niederdruckpumpe (12), die eine Hochdruckpumpe (14) mit Brennstoff speist,
**dadurch gekennzeichnet,**
**dass** sie ein Brennstoffleitungssystem (10) mit einer Drosselklappe (34) nach einem der vorherigen Ansprüche aufweist.

## Claims

1. Turbomachine fuel circuit (10) that comprises:
- a low pressure pump (12) feeding the fuel circuit (10) with fuel under pressure,
- a high pressure pump (14) supplied with fuel by the low pressure pump(12),
- a low pressure conduit (22) connecting the low pressure pump (12) to the high pressure pump (14),
- at least one high pressure conduit (26) supplied with fuel by said high pressure pump (14), in which at least one component (20) of the turbomachine is arranged, said high pressure conduit (26) comprising a segment (30) feeding said turbomachine component (20),
- means of testing operation of said at least one component (20) of the turbomachine,
**characterised in that** it comprises a check valve (34) capable of at least partly closing off a segment (30, 32) of said at least one conduit (26) associated with the component (20), when the fuel pressure in the low pressure conduit (22) is less than a predetermined threshold value, and **in that** said testing means are capable of detecting that the check valve (34) is at least partly closing off said segment (30, 32) .

2. Fuel circuit (10) according to the previous claim, **characterised in that** the check valve (34) is actuated directly by the fuel in the low pressure conduit (22).

3. Fuel circuit (10) according to the previous claim, **characterised in that** it comprises a conduit (36) directly connecting the check valve (34) to the conduit (22) supplied by the pump (12).

4. Fuel circuit (10) according to any one of the previous claims, **characterised in that** the check valve (34) is arranged in a segment (30) of the conduit (26) upstream from said component (20).

5. Fuel circuit (10) according to any one of claims 1 to 3, **characterised in that** the check valve (34) is arranged in a segment (30) of the conduit (26) downstream from said component (20).

6. Fuel circuit (10) according to any one of the previous claims, in which the pressure in the low pressure conduit (22) varies depending on the speed of the turbomachine,
**characterised in that** said threshold value is approximately equal to the minimum value of the pressure that the low pressure pump (12) is capable of producing, regardless of the operating conditions of the turbomachine.

7. Fuel circuit (10) according to any one of the previous claims, **characterised in that** the check valve (34) is capable of completely closing off the segment (30, 32) when the value of the pressure in the low pressure conduit (22) is less than said threshold value.

8. Fuel circuit (10) according to any one of the previous claims, **characterised in that** the check valve (34) is capable of partly closing off the segment (30, 32) when the value of the pressure in the low pressure conduit (22) is less than said threshold value.

9. Aircraft turbine comprising a low pressure pump (12) feeding fuel to a high pressure pump (14),
**characterised in that** it comprises a fuel circuit (10) comprising a check valve (34) according to any one of the previous claims.
